# EUROPEAN PATENT APPLICATION

(11) **EP 1 459 872 A2**
(43) Date of publication of application: **22.09.2004**
(21) Application number: 04006411.5
(22) Date of filing: 17.03.2004
(51) Int. Cl.: B29C 67/24, B29D 23/00, B29K 23/00

(54) **Hose material for fuel cell system and hose manufactured by using the same**

(30) Priority: 18.03.2003 JP 2003073216
(71) Applicant: Tokai Rubber Industries, Ltd., Komaki-shi, Aichi-ken, 485-8550 (JP)
(72) Inventor: Hirai, Ryo, Komaki-shi Aichi-ken, 485-8550 (JP); Ikemoto, Ayumu, Komaki-shi Aichi-ken, 485-8550 (JP)
(74) Representative: Frankland, Nigel Howard

(57) **Abstract**

A hose material for a fuel cell system which is superior in both the properties of low extraction and electrical isolation, and also has excellent mechanical properties. The hose material comprises an ethylene-propylene copolymer and carbon black having a toluene discoloration of 30% to 50%.

## Description

### BACKGROUND OF THE INVENTION

### Field of the Invention

The present invention relates to a hose material for a fuel cell system and to a hose manufactured by using the same hose material.

### Description of the Art

As next-generation power generation systems, there is a high degree of expectation for fuel cell systems, especially for polymer electrolyte fuel cells (PEFC). It is said that the electricity generating area of a fuel cell system is susceptible to foreign matter such as sulfur, metal ions or the like, so that performance in the area drastically deteriorates due to penetration of such foreign matter. For this reason, a hose material or a tube material used in such a fuel system requires that it have a low extraction property, in other words, the material tends not to be extracted by water flowing through a hose or a tube and has high standards of cleanliness. When a fuel cell system is used especially for vehicles, there is a problem of cooling a great amount of heat generated thereby. Thus, it is thought that the role taken by cooling system is significantly important. Since increase of electrical conductivity in coolant, for example, LLC (Long Life Coolant) in such a system tends to cause an electrical short-circuit, a hose material or a tube material for use in a fuel cell system (especially, in cooling system) is required to keep insulation of internal fluid (water or LLC) or suppress ion extraction so as not to increase the electrical conductivity of the fluid.

Heretofore, under such circumstances, a SUS tube has been used because of low ion dissolution or a complicated cooling system has been used, for example, by installing deionization means in the fuel cell system. However, when using a SUS tube, difficulties in molding or installation occur, which causes problems in terms of layout and processability, and in addition, a problem of poor vibration durability is also encountered. Further, when using a tube material with less extraction (high standards of cleanliness), it makes it possible to prolong the interval in regenerating resin, activated carbon or the like in deionization means required for a fuel cell system used in a fuel cell electrical vehicle (FCEV) or the like.

Further, a tube material connected with the fuel cell itself or accumulator battery (secondary battery) requires electrical insulation (high electrical resistance) for preventing electric shock due to stray current or current leakage. Alternately, a material of peripheral parts of the fuel cell system needs to absorb sound or vibration because a fuel cell system is quiet compared with an internal combustion system and noise cancelled by the internal combustion system becomes obvious in a fuel cell system. Accordingly, it has been expected that an elastomer material (a material having rubber elasticity) superior in low extraction, electrical insulation (high electrical resistance) and vibration resistance for absorbing sound and vibration may be developed as a hose material or a tube material for use in fuel cell systems.

As such a hose material for use in a fuel cell system, a mixture of an ethylene-propylene-diene terpolymer (EPDM) and carbon black has been conventionally used (for example, see Japanese Unexamined Patent Publication No. 10-180941). However, when forming a hose for a fuel cell system by using such a material, the thus obtained hose tends to have low mechanical properties and poor electrical insulation. In this case, the amount of carbon black mixed with EPDM is increased or highly filled to improve reinforcement characteristics.

However, when carbon black is high-filled to improve reinforcement characteristics as mentioned above, each particle of carbon black gets closer each other, which further reduces electrical resistance and increases electrical conductivity, resulting in remarkable inferiority in electrical insulation. Further, in this case, elongation of the hose deteriorates and the scorching property is aggravated. Then, instead of high-filling of carbon black, it is thought that perhaps carbon black may be used together with silica without an increase of carbon black. Although such a mixture is excellent in electrical insulation, it is drastically inferior in low extraction because the Si element of silica dissolves. Thus, it is the current situation that a material satisfying both low extraction and electrical insulation, and having superior mechanical properties is still not available. Such a material is strongly desired.

In view of the foregoing, it is an object of the present invention to provide a hose material for a fuel cell system which satisfies both low extraction and electrical insulation, and is also superior in mechanical properties, and a hose manufactured by using the same hose material.

### SUMMARY OF THE INVENTION

In accordance with a first aspect of the present invention to achieve the aforesaid objects, there is provided a hose material for fuel cell system comprising:
(A) an ethylene-propylene copolymer;
(B) carbon black having a toluene discoloration of 30% to 50%.

In accordance with a second aspect of the present invention to achieve the aforesaid objects, there is provided a hose for a fuel cell system formed by the same hose material.

The inventors of the present invention conducted intensive studies to provide a hose for a fuel cell system which satisfies both low extraction and electrical insulation, and is also superior in mechanical properties by focusing upon a hose material for a fuel cell system. During the process of their studies, the inventors focused attention on the toluene discoloration of carbon black. It was found that when the toluene discoloration of carbon black is too low, high electrical resistance is realized and becomes superior in electrical insulation, while low extraction is inferior because of the high unburnt combustible content on the surface of carbon black. On the other hand, when the toluene discoloration is too high, the low extraction is good while the high electrical resistance cannot be realized and the material is inferior in electrical insulation. As a result of further research and development on the optimum scope of a toluene discoloration, the inventors found that when carbon black having a toluene discoloration of 30% to 50% is used together with an ethylene-propylene copolymer, obtained is a hose for a fuel cell system which is superior both in low extraction and electrical insulation, and further has superior mechanical properties, and thereby achieved the present invention.

### DESCRIPTION OF THE PREFERRED EMBODIMENTS

Embodiments of the present invention will hereinafter be described in detail.

An inventive hose material for a fuel cell system may be obtained by using an ethylene-propylene copolymer (component A) and carbon black having a toluene discoloration of 30% to 50% (component B).

Examples of the ethylene-propylene copolymer (component A) include, for example, an ethylene-propylene-diene terpolymer (EPDM) and an ethylene-propylene copolymer (EPM) , which may be used either alone or in combination. The ethylene-propylene copolymer (component A) is not specifically limited, but the iodine value is preferably within a range of 6 to 30, particularly preferably 10 to 24, and the ethylene ratio is preferably within a range of 48% to 70% by weight, particularly preferably 50% to 60% by weight. Such an ethylene-propylene copolymer is superior in stability under high temperatures and high pressures.

The diene monomer (third component) of EPDM is not particularly limited, but preferably is a diene monomer having 5 to 20 carbon atoms. Examples thereof include 1,4-pentadiene, 1,4-hexadiene, 1,5-hexadiene, 2,5-dimethyl-1,5-hexadiene, 1,4-octadiene, 1,4-cyclohexadiene, cyclooctadiene, dicyclopentadiene (DCP), 5-ethylidene-2-norbornene (ENB), 5-butylidene-2-norbornene, 2-methallyl-5- norbornene and 2-isopropenyl-5-norbornene. Among these diene monomers (third component), dicyclopentadiene (DCP) and 5-ethylidene-2-norbornene (ENB) are particularly preferred.

A characteristic feature of the present invention is that carbon black having a toluene discoloration of 30% to 50% (component B) is used together with the ethylene-propylene copolymer (component A).

The aforementioned specific carbon black (component B) should have a toluene discoloration of 30% to 50%, preferably 35% to 45%. When a toluene discoloration is less than 30%, unburnt combustible content is too high, which may contaminate the surface of the carbon black so as to deteriorate low extraction. When a toluene discoloration is over 50%, the electrical insulation may deteriorate.

This toluene discoloration is determined in the following manner. In the manufacture of carbon black, the resultant carbon black includes unburnt combustible content such as oil attached to the surface of the carbon black and remaining unburnt residue. To determine a toluene discoloration, thus unburnt combustible content is dissolved into toluene and then optical transparency is measured for calculation of the toluene discoloration in accordance with Japanese Industrial Standard (hereinafter just abbreviated to "JIS") K 6218. A low value of toluene discoloration means that the amount of unburnt combustible content and the like attached to the surface of carbon black is high.

As a suitable carbon black (component B), carbon black having a dibutyl phthalate (DBP) adsorption amount of not less than 50ml/100g is preferred because such carbon black tends to impart a relatively high reinforcing effect to a hose. The DBP adsorption amount is the standard for the degree of carbon black structure. The higher the DBP adsorption amount, the higher is the carbon black structure, which indicates that the reinforcing effect will be higher.

The proportion of carbon black (component B) is preferably 20 to 140 parts by weight (abbreviated to "parts", hereinafter) based on 100 parts of an ethylene-propylene copolymer (component A), particularly preferably 60 to 120 parts. When the proportion of the component B is less than 20 parts, the reinforcing effect tends to be poor, which make it difficult to harden the resultant product. When the proportion of the component B is over 140 parts, the electrical resistance is reduced and the electrical insulation tends to deteriorate.

The inventive hose material for a fuel cell system may further include one or more of a peroxide vulcanizing agent, a co-crosslinking agent, process oil, an anti-aging agent and the like in addition to the ethylene-propylene copolymer (component A) and the carbon black (component B), as required.

Examples of suitable peroxide vulcanizing agents include peroxy ketals such as 1,1-bis(t-butylperoxy)-3,3,5-trimethyl cyclohexane, 1,1-bis(t-hexylperoxy)-3,3,5-trimethyl cyclohexane, 1,1-bis(t-hexylperoxy)cyclohexane, 1,1-bis(t-butylperoxy)cyclododecane, 1,1-bis(t-butylperoxy) cyclohexane, 2,2-bis(t-butylperoxy)octane, n-butyl-4,4-bis(t-butylperoxy)butane and n-butyl-4,4-bis(t-butylperoxy)valerate; dialkyl peroxides such as di-t-butylperoxide, dicumyl peroxide, t-butyl cumylperoxide, α,α'-bis(t-butylperoxy-m-isopropyl)benzene, α,*α,*-bis(t-butylperoxy)diisopropylbenzene, 2,5-dimetyl-2,5-di(t-butylperoxy)hexane and 2,5-dimetyl-2,5-bis(t-butylperoxy)hexyne-3; diacyl peroxides such as acetyl peroxide, isobutyryl peroxide, octanoyl peroxide, decanoyl peroxide, lauroyl peroxide, 3,5,5-trimethylhexanoyl peroxide, benzoyl peroxide, 2,4-dichlorobenzoylperoxide and m-toluoylperoxide; peroxy esters such as t-butylperoxy acetate, t-butylperoxy isobutylate, t-butylperoxy-2-ethylhexanoate, t-butylperoxylaurylate, t-butyl peroxybenzoate, di-t-butyl peroxyisophthalate, 2,5-dimethyl-2,5-di(benzoyl peroxy)hexane, t-butylperoxy maleic acid, t-butylperoxy isopropylcarbonate and cumylperoxyoctate; and hydro peroxides such as t-butylhydroperoxide, cumene hydroperoxide, diisopropylbenzene hydroperoxide, 2,5-dimethylhexane-2,5-dihydroperoxide and 1,1,3,3-tetramethylbutylperoxide, which may be used either alone or in combination. Among these peroxide vulcanizing agents, 2,5-dimethyl-2,5-di(t-butylperoxy)hexane is particularly preferred, because it is free from problems associated with smell.

The peroxide vulcanizing agent is preferably present in a proportion of 1.5 to 20 parts based on 100 parts of the ethylene-propylene copolymer (component A) . If the proportion of the peroxide vulcanizing agent is smaller than 1.5 parts, the resulting hose tends to have a lower strength because of insufficient crosslinking. If the proportion of the peroxide vulcanizing agent is greater than 20 parts, the resulting hose tends to have a poorer flexibility with a higher hardness.

Preferable examples of the co-crosslinking agent include, for example, divinyl benzene and triallyl isocyanurate (TAIC). Further examples thereof include triallyl cyanurate, diacetone diacrylamide, polyethylene glycol diacrylate, polyethylene glycol dimethacrylate, trimethylolpropane trimethacrylate, trimethylolpropane triacrylate, ethylene glycol dimethacrylate, triethylene glycol dimethacrylate, diethylene glycol dimethacrylate, diisopropenyl benzene, p-quinonedioxime, p,p'-dibenzoyl quinonedioxime, phenyl maleimide, allyl methacrylate, N,N-m-phenylenbismaleimide, diallyl phtahlate, tetraallyl oxyethane and 1,2-polybutadiene, which may be used either alone or in combination.

The co-crosslinking agent is preferably present in a proportion of 0.1 to 10 parts, particularly preferably 0.5 to 7.0 parts, based on 100 parts of the ethylene-propylene copolymer (component A).

The process oil is preferably present in a proportion of 5 to 100 parts, particularly preferably 20 to 80 parts, based on 100 parts of the ethylene-propylene copolymer (component A).

Examples of the anti-aging agent include, for example, a carbamate anti-aging agent, a phenylenediamine anti-aging agent, a phenol anti-aging agent, a diphenylamine anti-aging agent, a quinoline anti-aging agent and waxes, which may be used either alone or in combination.

The anti-aging agent is preferably present in a proportion of 0.2 to 2.0 parts, particularly preferably 0.5 to 1.0 parts, based on 100 parts of the ethylene-propylene copolymer (component A).

The inventive hose material for use in a fuel cell system can be prepared by mixing the ethylene-propylene copolymer (component A) and the carbon black (component B) and, as required, any of a peroxide vulcanizing agent, a co-crosslinking agent, a process oil, anti-aging agent or the like and working the resulting mixture by means of a kneading machine such as a kneader, a Banbury mixer or a roll mill.

The inventive hose for use in a fuel cell system is produced, for example, by molding the hose material, as prepared in the above manner, into a hose shape and vulcanizing the entire hose under prescribed conditions. When molding, a mandrel may be used, as required.

The thus produced hose may have a thickness of 1.5 to 12mm and an internal diameter of 5 to 50mm.

The structure of the hose is not limited to the aforesaid single-layer structure as the hose may have a multi-layer structure of two or more layers. In this case, an innermost layer of the inventive hose is preferably formed by using the inventive hose material for use in the fuel cell system from the viewpoint of low extraction and electrical insulation.

The inventive hose material for use in a fuel cell system is not limited to a material for use in such system, and, for example, is applicable to a hose for a stationary fuel cell system, a hose for transporting coolant in a computer or parts (such as a packing or a separator) for constituting such system.

Next, an explanation will be given to Examples and Comparative Examples.

Prior to conducting the Examples and the Comparative Examples, the following materials were obtained.

### EPDM

ESPRENE 501A available from Sumitomo Chemical Co. , Ltd., of Tokyo, Japan and having an iodine value of 12, an ethylene ratio of 50 wt% and a Mooney viscosity (ML1+4 100 °C) of 43

### Carbon black (1)

SRF carbon black (Asahi No. 52 available from Asahi Carbon Company of Niigata, Japan and having a toluene discoloration of 40% and a DBP adsorption amount of 130ml/100g)

### Carbon black (2)

SRF carbon black (a trial model made by Asahi Carbon Company and having a toluene discoloration of 30% and a DBP adsorption amount of 130ml/100g)

### Carbon black (3)

SRF carbon black (a trial model made by Asahi Carbon Company and having a toluene discoloration of 50% and a DBP adsorption amount of 130ml/100g)

### Carbon black (4)

SRF carbon black (Shoblack IP-200 available from Showa Cabot K.K. of Tokyo, Japan and having a toluene discoloration of 20% and a DBP adsorption amount of 130ml/100g)

### Carbon black (5)

SRF carbon black (GG042 available from Tokai Carbon Co., Ltd. of Tokyo, Japan and having a toluene discoloration of 60% and a DBP adsorption amount of 130ml/100g)

### Carbon black (6)

SRF carbon black (a trial model made by Asahi Carbon Company and having a toluene discoloration of 40% and a DBP adsorption amount of 50ml/100g)

### Process oil

Diana Process PW-380 available from Idemitsu Kosan Co., Ltd. of Tokyo, Japan

### Peroxide vulcanizing agent

2,5-dimethyl-2,5-di(t-butylperoxy)hexane (Perhexa 25B available from NOF Corporation of Tokyo, Japan)

### Co-crosslinking agent

Ethylene glycol-dimethacrylate (Hi-cross ED available from Seiko Chemical Co. , Ltd. of Tokyo, Japan)

### Phenylamine anti-aging agent

N-phenyl-N'-isopropyl-p-phenylenediamine (Ozonone 3C available from Seiko Chemical Co. , Ltd. of Tokyo, Japan)

### EXAMPLES 1 to 4 and COMPARATIVE EXAMPLES 1 to 3

Each material was blended as shown in Tables 1 and 2, and then the resulting mixture was kneaded by means of a Banbury mixer and a roll mill for preparation of a hose material for use in a fuel cell system.

Properties of the hose materials thus produced in accordance with the Examples and the Comparative Examples were evaluated in the following manners. The results of the evaluations are also shown in Tables 1 and 2.

### Tensile strength (TB) and elongation (EB)

Each hose material was press-vulcanized at 160° C for 45 minutes for preparation of a vulcanized rubber sheet having a thickness of 2 mm, and then stamped to provide a JIS No. 5 dumbbell specimen. The tensile strength (TB) and elongation (EB) of the specimen were determined in conformity with JIS K 6251. The larger the values of TB and EB, the better are such properties.

### Volume resistivity

The volume resistivity was determined in conformity with JIS K 6911 by using each hose material. The larger the value of the volume resistivity, the better is electrical insulation.

### Electrical conductivity of extracted solution

The thus vulcanized rubber sheet was stamped into a specimen of 28mm x 28mm x 2mm. The specimen was placed into a propylene container together with 50ml of pure water (1.0 *µ*S/cm), and then the container was sealed. The specimen was subjected to heat treatment at 100°C for 168 hours to obtain an extracted solution. The electrical conductivity of the thus obtained extracted solution was measured at 25°C by means of electrical conductivity meter (Conductivity meter D-24 available from Horiba, Ltd., Kyoto of Japan). For the evaluation of low extraction in Tables 1 and 2, the symbol ⓞ indicates that electrical conductivity was less than 3 *µ*S/cm, the symbol O indicates that electrical conductivity was not less than 3 *µ*S/cm and less than 4 *µ*S/cm, and the symbol × indicates that electrical conductivity was not less than 4 *µ*S/cm.

**Table 1**

| (Parts by weight) | | | | |
|---|---|---|---|---|
| | EXAMPLE | | | |
| | 1 | 2 | 3 | 4 |
| EPDM | 100 | 100 | 100 | 100 |
| Carbon black | | | | |
| (1)Toluene discoloration:40% | 100 | ― | ― | ― |
| (2)Toluene discoloration:30% | ― | 100 | ― | ― |
| (3)Toluene discoloration:50% | ― | ― | 100 | ― |
| (4)Toluene discoloration:20% | ― | ― | ― | ― |
| (5)Toluene discoloration:60% | ― | ― | ― | ― |
| (6)Toluene discoloration:40% | ― | ― | ― | 100 |
| Process oil | 50 | 50 | 50 | 50 |
| Peroxide vulcanizing agent | 5 | 5 | 5 | 5 |
| Co-crosslinking agent | 3 | 3 | 3 | 3 |
| Anti-aging agent | 0.5 | 0.5 | 0.5 | 0.5 |
| Tensile strength (MPa) | 12.1 | 12.0 | 12.1 | 9.2 |
| Elongation (%) | 250 | 250 | 250 | 230 |
| Volume resistivity (Ω·cm) | 1.0 x 10⁶ | 1.0 x 10⁶ | 7.0 x 10⁵ | 3.0 x 10⁶ |
| Electrical conductivity of extracted solution (*µ*S/cm) | 2.8 | 3.9 | 2.3 | 2.6 |
| Low extraction | ⓞ | O | ○ | ○ |

**Table 2**

| (Parts by weight) | | | |
|---|---|---|---|
| | COMPARATIVE EXAMPLE | | |
| | 1 | 2 | 3 |
| EPDM | 100 | 100 | 100 |
| Carbon black | | | |
| (1)Toluene discoloration:40% | ― | ― | ― |
| (2)Toluene discoloration:30% | ― | ― | ― |
| (3)Toluene discoloration:50% | ― | ― | ― |
| (4)Toluene discoloration:20% | 100 | ― | 150 |
| (5)Toluene discoloration:60% | ― | 100 | ― |
| Process oil | 50 | 50 | 50 |
| Peroxide vulcanizing agent | 5 | 5 | 5 |
| Co-crosslinking agent | 3 | 3 | 3 |
| Anti-aging agent | 0.5 | 0.5 | 0.5 |
| Tensile strength (MPa) | 12.0 | 12.0 | 17.0 |
| Elongation (%) | 250 | 250 | 180 |
| Volume resistivity (Ω **·** cm) | 1.0 x 10⁶ | 5.0 x 10⁴ | 1.0 x 10⁴ |
| Electrical conductivity of extracted solution (*µ*S/cm) | 4.3 | 2.1 | 5.4 |
| Low extraction | × | O | × |

As can be understood from the results shown in Tables 1 and 2, of the hose materials of the Examples, each was superior in all properties such as electrical insulation, low extraction and the like. Further, the inventors confirmed by experiments that the hose materials using EPM instead of EPDM of the Examples also were superior in all properties such as electrical insulation, low extraction and the like as same as Examples using EPDM.

In contrast, the hose material of Comparative Example 1 had a low toluene discoloration, and low extraction was inferior because the unburnt combustible content on a surface of carbon black was high. The hose material of Comparative Example 2 was too high in the toluene discoloration and electrical insulation was poor. Since the hose material of Comparative Example 3 was high-filled with carbon black, elongation was small and electrical insulation was inferior.

As described above, since the inventive hose material for a fuel cell system comprises an ethylene-propylene copolymer (component A) and carbon black having a toluene discoloration of 30% to 50% (component B), the inventive hose material satisfies both low extraction and electrical insulation, and is also superior in mechanical properties.

When a dibutyl phthalate (DBP) adsorption amount of the carbon black (component B) is within a specific range, the carbon black tends to impart a relatively high reinforcing effect to a hose.

When the proportion of the carbon black (component B) is within a specific range, low extraction and electrical insulation properties further improve.

## Claims

1. A hose material for a fuel cell system comprising:
(A) an ethylene-propylene copolymer;
(B) carbon black having a toluene discoloration of 30% to 50%.

2. A hose material as set forth in claim 1, wherein the carbon black has a dibutyl phthalate (DBP) adsorption amount of not less than 50ml/100g.

3. A hose material as set forth in claim 1 or claim 2, wherein the carbon black is present in an amount of 20 to 140 parts by weight based on 100 parts by weight of the ethylene-propylene copolymer.

4. A hose for a fuel cell system formed by using a hose material as set forth in any of claim 1 to claim 3.
